## Europäisches Patentamt

## European Patent Office

## Office européen des brevets

(19)

(11) Veröffentlichungsnummer: **0 174 668**
**B1**

(12) # EUROPÄISCHE PATENTSCHRIFT

(45) Veröffentlichungstag der Patentschrift:
02.08.89

(51) Int. Cl.⁴: **G01P 3/36**

(21) Anmeldenummer: **85111782.0**

(22) Anmeldetag: **08.09.82**

(60) Veröffentlichungsnummer der früheren Anmeldung
nach Art. 76 EPÜ: **0074609**

(54) Einrichtung zur Messung der Rotationsgeschwindigkeit.

(30) Priorität: **16.09.81 DE 3136688**

(43) Veröffentlichungstag der Anmeldung:
**19.03.86 Patentblatt 86/12**

(45) Bekanntmachung des Hinweises auf die Patenterteilung:
**02.08.89 Patentblatt 89/31**

(84) Benannte Vertragsstaaten:
**DE FR GB NL**

(56) Entgegenhaltungen:
**FR-A- 2 443 668**
**GB-A- 1 256 078**
**GB-A- 2 067 746**

(73) Patentinhaber: **ALCATEL N.V.,**
**Strawinskylaan 537 (World Trade Center), NL-1077 XX Amsterdam(NL)**
(84) Benannte Vertragsstaaten: **FR GB NL**

(73) Patentinhaber: **Standard Elektrik Lorenz Aktiengesellschaft, Lorenzstrasse 10, D-7000 Stuttgart 40(DE)**
(84) Benannte Vertragsstaaten: **DE**

(72) Erfinder: **Auch, Wilfried, Wiemarstrasse 6, D-7144 Asperg(DE)**
Erfinder: **Mohr, Friedemann, Keltenstrasse 28, D-7253 Renningen(DE)**
Erfinder: **Schlemper, Eberhard, Parkweg 3, D-7143 Vaihingen 7(DE)**
Erfinder: **Steudle, Walter, Schönblickweg 21, D-7441 Schlaitorf(DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30(DE)**

## Beschreibung

Die Erfindung geht aus von einer Einrichtung zur Messung der Rotationsgeschwindigkeit wie im Oberbegriff des Anspruchs 1 oder Anspruchs 2 angegeben.

Die bekannten Einrichtungen sind so aufgebaut, daß zur Auswertung ein Wechselspannungssignal zur Verfügung steht. Dabei wird beispielsweise so vorgegangen, daß man zusätzlich zu der durch den Sagnac-Effekt bedingten Phasendifferenz zwischen den beiden Teilstrahlen, die den Lichtweg gegensinnig durchlaufen, eine weitere Phasendifferenz erzeugt und diese so wählt, daß zur Auswertung die durch den Sagnac-Effekt bedingte Phasendifferenz kompensiert wird.

Solche Einrichtungen sind beispielsweise in der FR-A 2 443 668 und in dem Artikel »Techniques for Shot-Noise-Limited Inertial Rotation Measurement Using a Multiturn Fiber Sagnac Interferometer« von J. L. Davis und S. Ezekiel in Proceedings of the Society of Photo-Optical Instrumentation Engineers, Volume 157, Laser Inertial Rotation Sensors, August 30–31, 1978, San Diego, Kalifornien, Seiten 131–136" und der DE-OS 2 934 794 beschrieben.

Bei diesen bekannten Einrichtungen wird zur Erzeugung der weiteren Phasendifferenz ein Modulator (z. B. ein akusto/optischer Modulator) mit einem frequenz-modulierten Signal angesteuert. Dabei ist auch der Grenzfall der Frequenzmodulation, bei dem das frequenzmodulierte Signal nur noch eine erste oder eine zweite Frequenz aufweist, erwähnt.

Es hat sich gezeigt, daß bei der Realisierung von Einrichtungen zur Messung der Rotationsgeschwindigkeit mit Lichtwellenleitern die Empfindlichkeit der Lichtwellenleiter hinsichtlich äußerer Einflüsse (z.B. Auftreffen von Schallwellen, Einwirkung von Druck oder Temperatur) sehr groß ist. Dadurch wird die Messung gestört und die Meßgenauigkeit verschlechtert.

Es wurde versucht, die durch die äußeren Einwirkungen bedingten Änderungen der Ausbreitungseigenschaften in dem Lichtwellenleiter durch Regelschaltungen zu kompensieren. Solche Lösungen sind jedoch sehr aufwendig.

Es ist die Aufgabe der Erfindung, eine Einrichtung zur Messung der Rotationsgeschwindigkeit anzugeben, mit der die Messung mit großer Genauigkeit erfolgt.

Die Lösung dieser Aufgabe erfolgt mit den im Anspruch 1 oder Anspruch 2 angegebenen Mitteln.

Bei der im Anspruch 1 angegebenen Lösung erhält man ein sehr stabiles Regelsignal zur Regelung der Phasendifferenz zwischen den den geschlossenen Lichtweg entgegengesetzt durchlaufenden Teilstrahlen auf einen konstanten Wert. Aus der Amplitude des Signals, aus dem dieses Regelsignal abgeleitet wird, kann, wie bei der Lösung gemäß Anspruch 2 angegeben, die Rotationsgeschwindigkeit auch direkt ermittelt werden. Weiterhin werden bei der neuen Einrichtung eventuell vorhandene äußere Einflüsse auf den Lichtwellenleiter ferngehalten, so daß Änderungen derjenigen Ausbreitungseigenschaften des Lichts, die auf die Messung der Rotationsgeschwindigkeit einen Einfluß haben, nicht mehr auftreten. Dadurch werden Störungen klein gehalten und somit wird die Meßgenauigkeit vergrößert.

Bei der neuen Einrichtung ist der Lichtwellenleiter in eine Vergußmasse eingebettet. Mit Einbettung in eine Vergußmasse ist nicht die eventuell vorhandene Beschichtung eines handelsüblichen Lichtwellenleiters gemeint.

Die Erfindung wird anhand eines Ausführungsbeispieles näher erläutert.

Bei der neuen Einrichtung zur Messung der Rotationsgeschwindigkeit, bei der sich die Teilstrahlen in mindestens einem Lichtwellenleiter ausbreiten, ist der Lichtwellenleiter in einer Vergußmasse eingebettet. Eine spulenförmige Anordnung ist eine der möglichen Anordnungen des Lichtwellenleiters. Die Vergußmasse ist so beschaffen, daß von außen auftreffende Schallwellen gedämpft werden und daß entlang des Lichtwellenleiters eine möglichst gleichmäßige Temperaturverteilung entsteht, wobei der optische Brechungsindex der Vergußmasse angenähert gleich dem optischen Brechungsindex des Mantels des Lichtwellenleiters ist.

Als Material für die Vergußmasse eignet sich das Material, das für die Sekundärbeschichtung verwendet wird.

## Patentansprüche

1. Einrichtung zur Messung der Rotationsgeschwindigkeit mit einer einen Lichtstrahl erzeugenden Einrichtung, bei der Mittel vorgesehen sind, die diesen Lichtstrahl in zwei Teilstrahlen, die einen geschlossenen Lichtweg in entgegengesetzten Richtungen durchlaufen, aufteilen, bei der Mittel vorgesehen sind, die mindestens die Frequenz von einem der beiden Teilstrahlen verschieben, so daß die beiden Teilstrahlen unterschiedliche Frequenzen haben und nach dem Durchlaufen des Lichtwegs eine erste Phasendifferenz zueinander aufweisen, die, wenn die Rotationsgeschwindigkeit gleich null ist, nur von der Frequenzverschiebung abhängt, bei der ferner Mittel vorgesehen sind, die die beiden Teilstrahlen nach Durchlaufen des geschlossenen Lichtwegs einander überlagern und den durch die Überlagerung erzeugten Lichtstrahl einem optisch/elektrischen Wandler in einer Auswerteeinrichtung zuführen, bei der weiterhin in der Auswerteeinrichtung zur Bestimmung der Rotationsgeschwindigkeit die durch den Sagnac-Effekt bedingte weitere Phasenverschiebung, die zusätzlich zu der ersten Phasenverschiebung vorhanden ist, auswertbar ist, bei der außerdem Mittel vorgesehen sind, die zur Auswertung ein Regelsignal erzeugen, das die weitere Phasenverschiebung kompensiert, bei der weiterhin die Rotationsgeschwindigkeit aus dem Regelsignal ermittelt wird, bei der zudem zur Anzeige der Rotationsgeschwindigkeit eine Anzeigeeinrichtung vorgesehen ist und bei der weiterhin die Mittel zur Verschiebung der Frequenz von mindestens einem der beiden Teilstrahlen periodisch und alternierend mit zwei unterschiedlichen Ansteuerfrequenzen ansteuerbar sind, wodurch die beiden Teilstrahlen nach Durchlaufen des geschlossenen Lichtwegs abhängig von der jeweiligen Ansteuerfrequenz zwei unterschiedliche erste Phasendifferenzen zueinander haben, dadurch gekennzeichnet, daß die beiden Ansteuerfrequenzen so gewählt sind, daß die Ausgangssignale des optisch/elektrischen Wandlers bei der Rotationsgeschwindigkeit null gleiche Amplituden haben, daß das Ausgangssignal des optisch/elektrischen Wandlers einem Bandpaß dessen Mittenfrequenz angenähert gleich der Umschaltefrequenz, mit der zwischen den beiden Ansteuerfrequenzen umgeschaltet wird, ist, zuführbar ist, daß Mittel vorgesehen sind, die aus dem Ausgangssignal des Bandpasses das Regelsignal erzeugen und daß der Lichtweg als Lichtwellenleiter ausgebildet und in eine Vergußmasse eingebettet ist.

2. Einrichtung zur Messung der Rotationsgeschwindigkeit mit einer einen Lichtstrahl erzeugenden Einrichtung, bei der Mittel vorgesehen sind, die diesen Lichtstrahl in zwei Teilstrahlen, die einen geschlossenen Lichtweg in entgegengesetzten Richtungen durchlaufen, aufteilen, bei der Mittel vorgesehen sind, die mindestens die Frequenz von einem der beiden Teilstrahlen verschieben, so daß die beiden Teilstrahlen unterschiedliche Frequenzen haben und nach dem Durchlaufen des Lichtwegs eine erste Phasendifferenz zueinander aufweisen, die, wenn die Rotationsgeschwindigkeit gleich null ist, nur von der Frequenzverschiebung abhängt, bei der Mittel vorgesehen sind, die die beiden Teilstrahlen nach Durchlaufen des geschlossenen Lichtwegs einander überlagern und den durch die Überlagerung erzeugten Lichtstrahl einem optisch/elektrischen Wandler in einer Auswerteeinrichtung zuführen, bei der weiterhin in der Auswerteeinrichtung zur Bestimmung der Rotationsgeschwindigkeit die durch den Sagnac-Effekt bedingte weitere Phasenverschiebung, die zusätzlich zu der ersten Phasenverschiebung vorhanden ist, auswertbar ist, bei der außerdem Mittel vorgesehen sind, die zur Auswertung ein Regelsignal erzeugen, das die weitere Phasenverschiebung kompensiert, bei der zudem zur Anzeige der Rotationsgeschwindigkeit eine Anzeigeeinrichtung vorgesehen ist und bei der weiterhin die Mittel zur Verschiebung der Frequenz von mindestens einem der beiden Teilstrahlen periodisch und alternierend mit zwei unterschiedlichen Ansteuerfrequenzen ansteuerbar sind, wodurch die beiden Teilstrahlen nach Durchlaufen des geschlossenen Lichtwegs abhängig von der jeweiligen Ansteuerfrequenz zwei unterschiedliche erste Phasendifferenzen zueinander haben, dadurch gekennzeichnet, daß die beiden Ansteuerfrequenzen so gewählt sind, daß die Ausgangsignale des optisch/elektrischen Wandlers bei der Rotationsgeschwindigkeit null gleiche Amplituden haben, daß das Ausgangssignal des optisch/elektrischen Wandlers einem Bandpaß, dessen Mittenfrequenz angenähert gleich der Umschaltfrequenz, mit der zwischen den beiden Ansteuerfrequenzen umgeschaltet wird, ist, zuführbar ist, daß Mittel vorgesehen sind, die aus der Amplitude des Bandpaßausgangssignals die Rotationsgeschwindigkeit ermitteln und daß der Lichtweg als Lichtwellenleiter ausgebildet und in eine Vergußmasse eingebettet ist.

3. Einrichtung zur Messung der Rotationsgeschwindigkeit nach Anspruch 1 oder 2, dadurch gekennzeichnet, daß die Vergußmasse so beschaffen ist, daß von außen auftreffende Schallwellen gedämpft werden und daß entlang des Lichtwellenleiters eine möglichst gleichmäßige Temperaturverteilung entsteht.

## Claims

1. Rotation rate measuring instrument comprising a device generating a light beam, means for splitting this light beam into two beams which travel over a closed light path in opposite directions, means for shifting the frequency of at least one of the two beams so that the two beams have different frequencies and, after traversing the light path, have a first phase difference between them which, if the rotation rate is zero, depends only on the frequency shift, means which combine the two beams after passage through the closed light path and direct the light beam produced by the combination to an optical-to-electric transducer in an evaluating unit in which the phase shift introduced by the Sagnac effect, which is present in addition to the first phase shift, can be evaluated to determine the rotation rate, means for generating a control signal for evaluation purposes which compensates for the additional phase shift and from which the rotation rate is determined, and an indicating device for indicating the rotation rate, the means for shifting the frequency of at least one of the two beams being drivable periodically and alternately at two different drive frequencies, so that after passage through the closed light path, the two beams have two different first phase differences depending on the respective drive frequency, characterized in that the two drive frequencies are chosen so that the output signals of the optical-to-electric transducer have equal amplitudes when the rotation rate is zero, that the output signal of the optical-to-electric transducer can be applied to a band-pass filter whose midband frequency is approximately equal to the frequency at which switching takes place between the two drive frequencies, that means are provided for deriving the control signal from the output signal of the band-pass filter, and that the light path is implemented with an optical waveguide and embedded in a sealing compound.

2. Rotation rate measuring instrument comprising a device generating a light beam, means for splitting this light beam into two beams which travel over a closed light path in opposite directions, means for shifting the frequency of at least one of the two beams so that th etwo beams have different frequencies, and after traversing the light path, have a first phase difference between them which, if the rotation rate is zero, depends only on the frequency shift, means which combine the two beams after passage through the closed light path and direct the light beam produced by the combination to an optical-to-electric transducer in an evaluating unit in which the phase shift introduced by the Sagnac effect, which is present in addition to the first phase shift, can be evaluated to determine the rotation rate, means for generating a control signal for evaluation purposes which compensates for the additional phase shift, and an indicating device for indicating the rotation rate, the means for shifting the frequency of at least one of the two beams being drivable periodically and alternately at two different drive frequencies, so that after passage through the closed light path, the two beams have two different first phase differences depending on the respective drive frequency, characterized in that the two drive frequencies are chose so that the output signals of the optical-to-electric transducer have equal amplitudes when the rotation rate is zero, that the output signal of the optical-to-electric transducer can be applied to a band-pass filter whose midband frequency is approximately equal to the frequency at which switching takes place between the two drive frequencies, that means are provided for determining the rotation rate from the amplitude of the output signal of the band-pass filter, and that the light path is implemented with an optical waveguide and embedded in a sealing compound.

3. A rotation rate measuring instrument as claimed in claim 1 or 2, characterized in that the sealing compound is so constituted that sound waves incident from outside are attenuated and that as uniform a temperature distribution as possible is obtained along the optical waveguide.

**Revendications**

1. Appareillage de mesure de vitesse de rotation comprenant un dispositif produisant un faisceau lumineux, dans lequel des moyens sont prévus pour diviser ce faisceau lumineux en deux faisceaux partiels parcourant en sens opposés un trajet lumineux fermé, des moyens sont prévus pour décaler au moins la fréquence de l'un des deux faisceaux partiels, de sorte que les deux faisceaux partiels aient des fréquences différentes et présentent entre eux une première différence de phase après avoir parcouru le trajet lumineux, laquelle ne dépend que du décalage en fréquence lorsque là vitesse de rotation est nulle, ainsi que d'autres moyens pour superposer les deux faisceaux partiels après qu'ils aient parcouru le trajet lumineux et fournir le faisceau lumineux obtenu par la superposition à un convertisseur opto-électrique d'un équipement d'évaluation, dans lequel en outre le déphasage additionnel provoqué par l'effet Sagnac, qui s'ajoute à la première différence de phase, peut être évalué dans l'équipement d'évaluation pour déterminer la vitesse de rotation, tandis que des moyens sont encore prévus pour produire un signal de commande aux fins de l'évaluation, qui compense le déphasage additionnel, la vitesse de rotation étant déterminée à partir de ce signal de commande, et que, par surcroît, il est prévu un dispositif d'affichage pour l'indication de la vitesse de rotation, tandis que les moyens pour modifier la fréquence d'au moins un des deux faisceaux partiels sont commandés périodiquement et alternativement par deux fréquences de commande différentes, de sorte que les deux faisceaux partiels, après avoir parcouru le trajet lumineux fermé présentent, selon la fréquence de commande respective, deux premières différences de phases différentes l'une de l'autres, caractérisé en ce que les deux fréquences de commande sont choisies telles que les signaux de sortie du convertisseur opto-électrique ont des amplitudes égales lorsque la vitesse de rotation est nulle, en ce que le signal de sortie du convertisseur opto-électrique est fourni à un filtre passebande dont la fréquence centrale est approximativement égale à la fréquence de commutation selon laquelle se produit la commutation entre les deux fréquences de commande, en ce que des moyens sont prévus pour produire le signal de commande à partir du signal de sortie du filtre passebande et en ce que ledit trajet lumineux a la forme d'un guide d'onde optique et en ce qu'il est inclus dans une masse de scellement.

2. Appareillage de mesure de vitesse de rotation comprenant un dispositif produisant un faisceau lumineux, dans lequel des moyens sont prévus pour diviser ce faisceau lumineux en deux faisceaux partiels parcourant en sens opposés un trajet lumineux fermé, des moyens sont prévus pour décaler au moins la fréquence de l'un des deux faisceaux partiels, de sorte que les deux faisceaux partiels aient des fréquences différentes et présentent entre eux une première différence de phase, après avoir parcouru le trajet lumineux, laquelle ne dépend que du décalage en fréquence lorsque la vitesse de rotation est nulle, ainsi que d'autres moyens pour superposer les deux faisceaux partiels après qu'ils aient parcouru le trajet lumineux et fournir le faisceau lumineux obtenu par la superposition à un convertisseur opto-électrique d'un équipement d'évaluation, dans lequel en outre le déphasage additionnel provoqué par l'effet Sagnac, qui s'ajoute à la première différence de phase, peut être évalué dans l'équipement d'évaluation pour déterminer la vitesse de rotation, tandis que des moyens sont encore prévus pour produire un signal de commande aux fins de l'évaluation, qui compense le déphasage additionnel, et que, par surcroît, il est prévu un dispositif d'affichage pour l'indication de la vitesse de rotation, tandis que les moyens pour modifier la fréquence d'au moins un des deux faisceaux partiels sont commandés périodiquement et alternativement par deux fréquences de commande différentes, de sorte que les deux faisceaux partiels, après avoir parcouru le trajet lumineux fermé présentent, selon la fréquence de commande respective, deux premières différences de phases différentes l'une de l'autres, caractérisé en ce que les deux fréquences de commande sont choisies telles que les signaux de sortie du convertisseur opto-électrique ont des amplitudes égales lorsque la vitesse de rotation est nulle, en ce que le signal de sortie du convertisseur opto-électrique est fourni à un filtre passe-bande dont la fréquence centrale est approximativement égale à la fréquence de commutation selon laquelle se produit la commutation entre les deux fréquences de commande, en ce que des moyens sont prévus pour déterminer la vitesse de rotation à partir de l'amplitude du signal de sortie du filtre passe-bande et en ce que ledit trajet lumineux a la forme d'un guide d'onde optique et en ce qu'il est inclus dans une masse de scellement.

3. Appareillage de mesure de vitesse de rotation conforme à la revendication 1 ou 2, caractérisé en ce que la masse de scellement est travaillée de sorte que les ondes sonores incidentes d'origine externe soient amorties et qu'une distribution de températures aussi égale que possible soit obtenue le long du guide d'onde optique.